Europäisches Patentamt

European Patent Office

Office européen des brevets

(19)

(11) **EP 1 320 959 B1**

(12) **FASCICULE DE BREVET EUROPEEN**

(45) Date de publication et mention
de la délivrance du brevet:
**04.05.2005 Bulletin 2005/18**

(21) Numéro de dépôt: **01972198.4**

(22) Date de dépôt: **25.09.2001**

(51) Int Cl.[7]: **H04L 12/26**, H04Q 11/04,
H04L 12/56

(86) Numéro de dépôt international:
**PCT/FR2001/002964**

(87) Numéro de publication internationale:
**WO 2002/025452 (28.03.2002 Gazette 2002/12)**

(54) **PROCEDE ET DISPOSITIF DE PREDICTION DE TRAFIC AVEC UN RESEAU DE NEURONES**

VERFAHREN UND VORRICHTUNG ZUR VERKEHRSPRÄDIKTION MIT EINEM NEURONALEN
NETZWERK

METHOD AND DEVICE FOR PREDICTING TRAFFIC WITH A NEURAL NETWORK

(84) Etats contractants désignés:
**DE ES FR GB IT**

(30) Priorité: **25.09.2000 FR 0012151**

(43) Date de publication de la demande:
**25.06.2003 Bulletin 2003/26**

(73) Titulaire: **FRANCE TELECOM**
**75015 Paris (FR)**

(72) Inventeurs:
• **CLEROT, Fabrice**
**F-22700 Louannec (FR)**
• **GOUZIEN, Pascal**
**F-22300 Lannion (FR)**

(74) Mandataire: **Verdure, Stéphane**
**Cabinet Plasseraud**
**65/67 rue de la Victoire**
**75440 Paris Cedex 09 (FR)**

(56) Documents cités:
**FR-A- 2 745 455**

• **WOOK-JIN JANG ET AL: "An Intelligent
Architecture for Traffic Controls in ATM
Network" PROCEEDINGS HIGH PERFORMANCE
COMPUTING ON THE INFORMATION
SUPERHIGHWAY, HPC ASIA '97, 28 avril 1997
(1997-04-28) - 2 mai 1997 (1997-05-02), pages
242-247, XP002168592 Seoul, South Korea**
• **LOBEJKO W: "TRAFFIC PREDICTION BY
NEURAL APPROACH" ANNUAL MILITARY
COMMUNICATIONS CONFERENCE,US,NEW
YORK, IEEE, vol. 15TH, 22 octobre 1996
(1996-10-22), pages 571-575, XP000697341
ISBN: 0-7803-3683-6**

EP 1 320 959 B1

**Description**

La présente invention concerne un procédé et un dispositif de prédiction de trafic avec un réseau de neurones. Le terme trafic s'entend ici d'un flux de données numériques.

Elle se rapporte au domaine des réseaux de télécommunications et trouve des applications avec les procédés et dispositifs d'allocation dynamique de ressources, notamment mais pas exclusivement pour les réseaux à large bande tels que les réseaux BISDN (de l'anglais « Broadband Integrated Services Digital Networks » qui signifie réseaux numériques à intégration de services à large bande).

De tels réseaux offrent un service de transfert de données à différentes applications dont les besoins en termes de bande passante et de qualité de service (QoS) ne sont pas forcément les mêmes. C'est pourquoi les propriétés en termes de débit et de QoS d'une communication entre deux applications sur un tel réseau, font en général l'objet d'une négociation entre le réseau et l'application source. Cette négociation a lieu à l'ouverture de la communication. Elle débouche sur un « contrat de trafic ». Les besoins d'une application déterminée peuvent en outre varier en cours de communication, du fait notamment des fluctuations du trafic de la communication. C'est pourquoi il est connu d'appliquer des procédures de renégociation, en cours de communication, des paramètres du contrat de trafic. Ceci permet une utilisation optimale des ressources du réseau. Cette renégociation peut être effectuée à la demande de l'application source, ou périodiquement.

Un contrat de trafic d'une communication comprend deux éléments. D'une part un descripteur de trafic avec des paramètres tels que le débit maximum de données émises par l'application source et la tolérance de la variation du délai entre l'émission des unités de données (par exemple des cellules ATM ou des datagrammes IP) encore appelée tolérance de gigue. Et d'autre part une classe de QoS définie par exemple par un paramètre tel que le taux de pertes de données. En vertu du contrat de trafic souscrit, le réseau garantit la qualité de service négociée sous réserve bien entendu que le trafic de la source respecte les paramètres du descripteur. Les paramètres du contrat de trafic sont utilisés pour la réservation ou allocation des ressources nécessaires du réseau (taille des mémoires tampon, etc.).

L'invention peut ainsi s'appliquer en liaison avec une technique de renégociation en cours de communication des paramètres d'un contrat de trafic d'une communication sur un réseau de télécommunications, tel qu'un réseau ATM (le mode ATM est un mode orienté connexion) ou un réseau IP avec un protocole de signalisation (tel que RSVP) permettant la gestion des communications sur ce réseau IP. Une telle technique est mise en oeuvre, par exemple, au niveau de l'interface utilisateur (UNI, de l'anglais User Network Interface) avec un réseau local (LAN, de l'anglais Local Area Network). Elle peut aussi être mise en oeuvre au niveau d'une interface de noeud de réseau (NNI, de l'anglais Network Node Interface) pour l'interconnexion d'un LAN avec un réseau étendu (WAN, de l'anglais Wide Area Network), ou pour l'interconnexion de deux WAN.

Mais les applications de l'invention ne se limitent pas aux techniques de renégociation, en cours de communication, des paramètres d'un contrat de trafic d'une communication entre deux applications établie sur un réseau de télécommunications. En effet, l'invention s'applique d'une façon générale aux techniques d'allocation dynamique de ressources pour un élément de réseau quelconque, par exemple une mémoire tampon (« Buffer » en anglais), qui est traversé par un trafic déterminé (pouvant regrouper le trafic de plusieurs communications respectives établies à travers cet élément de réseau). L'allocation de ressources est dite dynamique car elle peut être modifiée pour s'adapter au comportement du trafic.

C'est en particulier pour les trafics à débit variable (Variable Bit Rate, en anglais), tels que les trafics observés à l'interconnexion des réseaux locaux, que la modification des ressources allouées permet une utilisation plus efficace des ressources du réseau. On appelle période de trafic l'intervalle de temps entre deux modifications successives. Il est nécessaire de disposer d'une méthode de prédiction du trafic considéré, à l'horizon de la prochaine période de trafic.

Des méthodes de prédiction de trafic avec un réseau de neurones ont fait l'objet de la publication « Using Neural Networks for Predicting Transient Leaky Bucket Characterisations of Data Trafic. Application to Dynamic Resource Allocation in ATM Networks », CLEROT F., GOUZIEN P., FERAUD R., GRAVEY A., COLLOBERT D., ATM'98, IFIP Workshop on Performance Modelling and Evaluation of ATM Networks, et de la publication « Dynamical Resource Reservation Scheme in an ATM Network Using Neural Network-based Traffic Prediction » CLEROT F., GOUZIEN P., BENGIO S., GRAVEY A., COLLOBERT D., ATM'97, IFIP Workshop on Performance Modelling and Evaluation of ATM Networks.

Dans la demande de brevet FR-A-2 745 455 du même demandeur, il est en outre divulgué un procédé de renégociation, en cours de communication, des paramètres d'un contrat de trafic d'une communication sur un réseau ATM, qui comporte une étape consistant à prédire, pour une période de temps prédéterminée entre deux renégociations successives, la longueur maximum qu'atteindrait une file virtuelle nourrie par le trafic de la communication pour un débit de sortie donné de ladite file. Cette prédiction est réalisée à l'aide d'un réseau de neurones à partir d'informations caractérisant le trafic dans une période qui précède le moment de la renégociation.

Un réseau de neurones est défini par une structure et des paramètres. La structure d'un réseau de neurones se rapporte au nombre de couches d'unités qu'il contient, et au nombre d'unités de chacune de ces couches. Au minimum, un réseau de neurones comporte une couche d'entrée et une couche de sortie, entre lesquelles une ou plusieurs couches cachées peuvent éventuellement être prévues. Si l'on ordonne les couches d'unités en partant de la couche d'entrée et en allant vers la couche de sortie, les unités d'une couche déterminée sont reliées à toutes les unités de la couche précédente (sauf pour la couche d'entrée) et à toutes les unités de la couche suivante (sauf pour la couche de sortie), par des synapses. A chaque synapse correspond un paramètre du réseau de neurones, aussi appelé poids. La valeur délivrée par chaque unité (autre que les unités de la couche d'entrée) correspond à la valeur des unités de la couche précédente pondérée par les poids correspondants. On notera que des poids peuvent éventuellement être nuls.

Un réseau de neurones est particulièrement adapté à la prédiction du comportement d'un processus, tel que le trafic d'une communication sur un réseau de télécommunications, à partir de l'observation de ce processus sur une fenêtre du passé. Lors d'une phase d'apprentissage, le réseau de neurones est entraîné à cette fin. L'apprentissage consiste, à partir d'une structure déterminée du réseau, à optimiser le jeu de poids du réseau et à sélectionner celui de ces jeux de poids qui donne les meilleures performances en terme de précision de la prédiction. Durant l'apprentissage, le réseau de neurones est nourri en entrée par une séquence d'apprentissage.

Dans l'art antérieur illustré par les publications et la demande de brevet ci-dessus, la séquence d'apprentissage est un jeu de données d'apprentissage considéré comme représentant exhaustivement les comportements possibles du trafic. Ces données sont déterminées lors d'une campagne de mesures effectuées à l'endroit du réseau de télécommunications où l'on souhaite mettre en oeuvre la prédiction. L'apprentissage est effectué avant l'installation et la mise en service des moyens de prédiction, c'est à dire « hors ligne ».

Il est donc nécessaire de réaliser une campagne de mesures et un apprentissage spécifique pour chaque endroit du réseau où l'on souhaite installer des moyens de prédiction de trafic. En outre, ces moyens de prédiction ne peuvent s'adapter à l'évolution ultérieure du comportement du trafic, susceptible d'affecter leurs performances. Ces moyens ne peuvent donc pas être installés sur le long terme, sans prévoir de nouvelles campagnes de mesures et des apprentissages du réseau de neurones correspondants.

Le but de l'invention est de remédier à ces inconvénients de l'art antérieur.

Ce but est atteint grâce à un procédé de prédiction de trafic selon la revendication 1.

Ainsi, l'invention prévoit un apprentissage « en ligne » du réseau de neurones. Des informations caractérisant le trafic passé sont produites en permanence et les poids du réseau de neurones peuvent être modifiés dynamiquement, en fonction de ces informations, pour s'adapter à l'évolution du comportement du trafic. Les ressources du réseau de télécommunications peuvent alors être exploitées de façon optimale. Les filtres des moyens de prédiction assurent un pré-traitement des informations caractérisant le trafic passé, grâce auquel on peut utiliser un réseau de neurones de structure assez simple, dont l'apprentissage est suffisamment rapide pour être réalisé en permanence.

Par commodité, les informations produites à l'étape a) sont parfois appelées valeurs observées et les informations produites à l'étape b) sont parfois appelées valeurs prédites dans la suite.

Une information caractérisant le trafic sur une fenêtre de caractérisation déterminée (fenêtre d'observation pour le trafic passé ou fenêtre de prédiction pour le trafic futur), est de préférence constituée par une approximation supérieure d'un point de la courbe d'arrivée du trafic sur ladite fenêtre de caractérisation, c'est à dire par une estimation de la quantité maximale de données reçues pendant un intervalle de temps de durée déterminée sur ladite fenêtre de caractérisation. La valeur prédite est alors homogène à un débit, exprimé en Mbits/s (mégabits par seconde). D'autres informations pourraient également être utilisées pour caractériser le trafic, telles que la durée moyenne entre la réception de deux unités de données (cellules ATM ou datagrammes IP par exemple) consécutives. Dans tous les cas, on ne cherche pas à prédire la valeur exacte du trafic sur la prochaine fenêtre de prédiction, mais la valeur d'une enveloppe du trafic sur cette fenêtre.

L'apprentissage permanent du réseau de neurones permet en outre de modifier dynamiquement le taux d'erreurs de prédiction visé. Ce taux est par exemple exprimé en pourcentage de prédictions erronées. Une prédiction est dite erronée lorsque la valeur caractérisant le trafic futur sur la fenêtre de prédiction considérée qui est produite, se révèle postérieurement être inférieure à une valeur caractérisant le trafic qui a réellement été observé sur ladite fenêtre. Le taux d'erreur de prédiction visé permet de régler le pessimisme de la prédiction. En effet, plus ce taux est faible et plus les valeurs prédites sont élevées.

L'invention propose également un dispositif selon la revendication 14 pour la mise en oeuvre du procédé.

Les moyens de prédiction comprennent en outre n filtres de prédiction ayant des fenêtres de filtrage respectives différentes, étant nourris chacun par ladite série d'information caractérisant le trafic passé, et produisant audits instants déterminés n informations intermédiaires respectives caractérisant le trafic sur la prochaine fenêtre de prédiction, qui sont délivrées en entrée du réseau de neurones.

D'autres aspects de l'invention concernent une interface de noeud de réseau et un réseau de télécommunications, respectivement selon la revendication 17 et selon la revendication 18.

D'autres caractéristiques et avantages de l'invention apparaîtront encore à la lecture de la description qui va suivre. Celle-ci est purement illustrative et doit être lue en regard des dessins annexés, sur lesquels on a représenté :

- à la figure 1 : un graphique montrant le débit de données d'une communication sur un réseau de communication en fonction du temps ;
- à la figure 2 : le schéma symbolique d'un dispositif pour la mise en oeuvre du procédé de prédiction selon l'invention ;
- à la figure 3 : le schéma symbolique d'un dispositif pour la mise en oeuvre du procédé selon un mode de réalisation préféré ;
- à la figure 4 : un graphique montrant les performances des moyens de prédiction en fonction du taux d'erreurs de prédiction visé ;
- à la figure 5 : un graphique montrant le taux d'erreurs obtenu en fonction du taux d'erreurs visé ;
- à la figure 6 : le schéma d'un exemple d'application d'un dispositif selon l'invention.

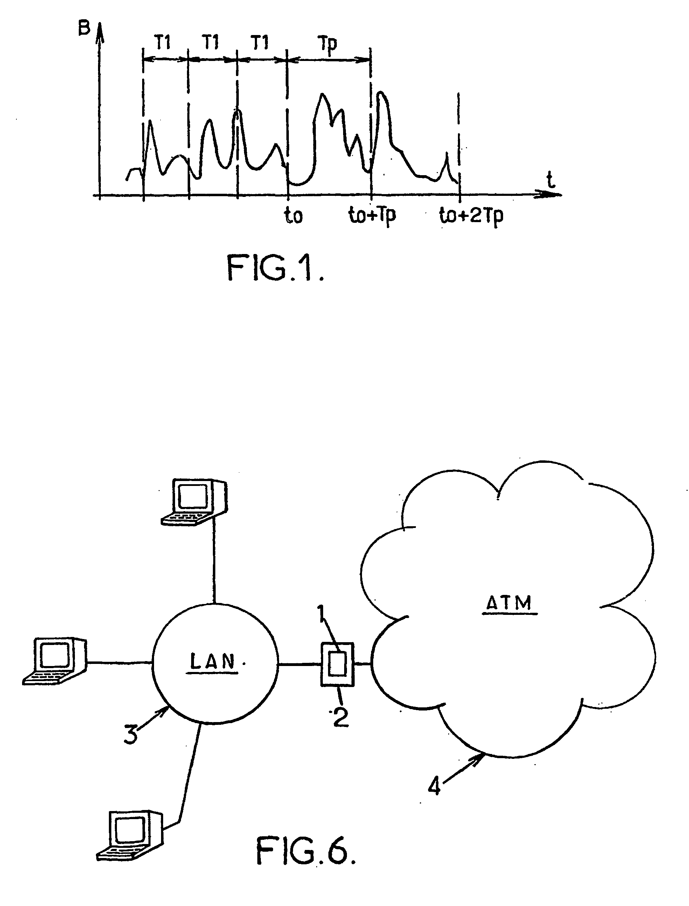

Sur le graphique de la figure 1, la courbe indique en fonction du temps t, le débit $B(t)$ du flux de données correspondant au trafic d'une communication déterminée sur un réseau de télécommunications. Une telle courbe est appelée « trace » dans le jargon de l'homme du métier. Elle donne une représentation graphique du trafic de la communication. A la figure 1, on note $t_o$ un instant auquel on effectue une renégociation en ligne du contrat de trafic de la communication. On note Tp l'intervalle de temps entre deux renégociations successives. En général, la durée de l'intervalle de temps Tp est constante, les renégociations étant effectuées périodiquement, à des instants to, $t_o$+Tp, $t_o$+2.Tp, ... régulièrement espacés dans le temps. On parle alors de période de trafic pour désigner l'intervalle de temps entre deux négociations.

Le procédé de prédiction de trafic selon l'invention vise à estimer, en un noeud particulier du réseau de télécommunication et aux instants $t_o$, to+Tp, to+2.Tp, ... etc, le comportement du trafic futur sur des fenêtres temporelles, appelées fenêtres de prédiction correspondant de préférence aux périodes de trafic Tp, à partir de l'observation du comportement du trafic passé sur des fenêtres temporelles d'observation T1. La largeur de la prochaine période de trafic ou fenêtre de prédiction Tp correspond à l'horizon de prédiction. Les fenêtres d'observation T1 sont des intervalles de temps consécutifs, qui découpent le temps passé, c'est à dire antérieur à l'instant considéré to, to + Tp, to+2.Tp, etc. On notera que, dans le cas général, les fenêtres d'observation T1 ne coïncident pas forcément avec les fenêtres de prédiction Tp antérieures.

Le comportement du trafic peut être caractérisé par une information telle qu'une approximation supérieure d'une valeur de la courbe d'arrivée du trafic sur un intervalle de temps déterminé appelé fenêtre de caractérisation. Pour le trafic passé, cet intervalle, de temps est la fenêtre d'observation T1. Pour le trafic futur, cet intervalle de temps est la fenêtre de prédiction Tp. Ainsi, à chaque instant $t_o$, to+Tp, to+2.Tp, ... etc., on produit une approximation supérieure d'une valeur de la courbe d'arrivée du trafic (futur) sur la fenêtre de prédiction Tp correspondante, à partir d'une série de valeurs de la courbe d'arrivée du trafic passé sur des fenêtres d'observation T1 respectives.

Dans ce qui suit, on rappelle tout d'abord la notion théorique de courbe d'arrivée et on décrit une méthode de caractérisation du trafic passé qui permet, dans la pratique, de produire une approximation supérieure d'une valeur de la courbe d'arrivée du trafic passé sur une fenêtre de caractérisation To déterminée quelconque, moyennant certaines approximations.

D'un point de vue théorique, et pour un trafic donné, une valeur $U(\tau)$ de la courbe d'arrivée du trafic sur une fenêtre de caractérisation To déterminée, est définie par :

$$U(\tau) = \max_{0<t<To-\tau} \left( \int_t^{t+\tau} B(u)\,du \right) \qquad (1)$$

où $B(u)$ est le débit instantané du trafic à l'instant u.

La valeur $U(\tau)$ de la courbe d'arrivée du trafic sur la fenêtre To est donc la quantité maximale de données reçues pendant un intervalle de temps de durée $\tau$, inférieure à To, sur la fenêtre de caractérisation To. Les courbes d'arrivée peuvent être employées pour le dimensionnement des ressources du réseau de télécommunications (taille de mémoires, débit de liens etc.) en fonction de critères de qualité de service (taux de pertes, délai de remise, etc.). La caractérisation complète du trafic sur la fenêtre To est constituée de toute la courbe d'arrivée, c'est à dire de toutes les valeurs $U(\tau)$ pour $\tau$ compris entre O et To ($0<\tau<$ To).

Toutefois, dans un exemple de mise en oeuvre du procédé selon l'invention, le trafic passé n'est caractérisé, sur un intervalle de caractérisation TO déterminé, que par certaines valeurs de $U(\tau)$. Dans la suite, on décrit le fonctionnement d'un dispositif permettant de produire une seule valeur $U(\tau)$, pour une valeur $\tau$ déterminée. Si on veut produire plusieurs valeurs $U(\tau_1)$, $U(\tau_2)$, ..., $U(\tau_q)$ pour q valeurs $\tau_1$, $\tau_2$, ..., $\tau_q$ déterminées, il suffit de mettre en parallèle q tels dispositifs, dédiés chacun à la production d'une de ces valeurs $U(\tau_2)$, ..., $U(\tau_q)$.

On explique en effet ci-dessous une méthode de caractérisation en ligne du trafic passé qui permet, en pratique, de générer en ligne une approximation supérieure de la valeur $U(\tau)$.

Supposons que le temps soit découpé en intervalles de temps de durée $\theta$ très inférieure à $\tau$, et qu'on sache mesurer en ligne la quantité $B_j$ de données arrivées sur chacun de ces intervalles de temps. En notant $E(x)$ la fonction partie entière de $x$, on a alors l'approximation suivante :

$$\int_t^{t+\tau} B(u)du \approx \sum_{j=E(t/\theta)}^{j=E((t+\tau)/\theta)} B_j \qquad\qquad (2)$$

Plus précisément, en posant $k = E(t/\theta)$ et en encadrant un intervalle de temps de durée $\tau$ dans les intervalles de temps de durées multiples de $\theta$, on obtient :

$$\max_k \left( \sum_{j=k}^{j=k+E(\tau/\theta)} B_j \right) < U(\tau) < \max_k \left( \sum_{j=k}^{j=k+E(\tau/\theta)+2} B_j \right) \qquad (3)$$

avec $0 < k < E((To-\tau)/\theta)$.

Ces maxima sont facilement obtenus à partir des quantités $B_j$ mesurées en ligne. L'approximation est évidemment d'autant meilleure que $\theta$ est petit devant $\tau$, mais la charge de calcul augmente en proportion inverse de $\theta$. Dans un exemple $\tau$ est égal à 1 seconde, et $\theta$ est égal à 0,1 seconde. Une autre approximation consiste à ne retenir que le membre de droite de l'inégalité (3), On obtient ainsi une approximation supérieure de la quantité maximale de données du trafic de la communication, qui ont été reçues, au niveau du noeud considéré du réseau de télécommunications, pendant un intervalle de temps $\tau$ sur la fenêtre de caractérisation To.

La méthode de caractérisation décrite ci-dessus est mise en oeuvre par dispositif comprenant un module de caractérisation coopérant avec un module de mesure des quantités de données $B_j$ arrivées sur des intervalles de temps $\theta$ respectifs. Ces modules sont avantageusement réalisés sous la forme de logiciels.

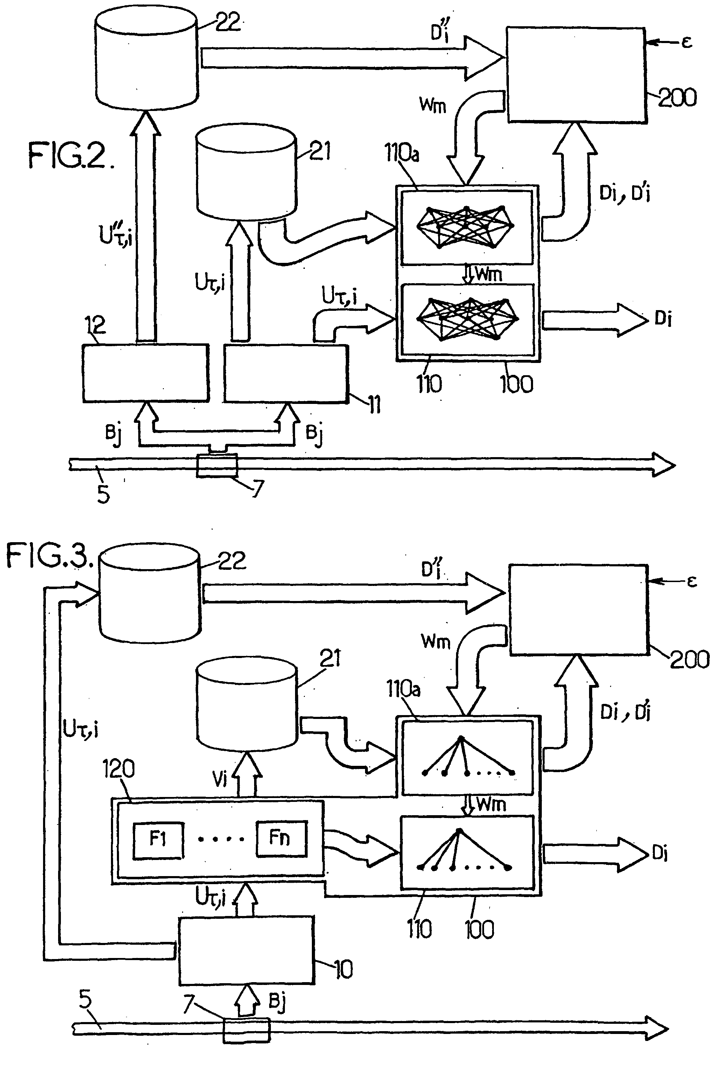

A la figure 2 on a représenté schématiquement un dispositif pour la mise en oeuvre du procédé de prédiction selon l'invention.

Le trafic de la communication est symbolisé par la flèche 5. Un module de mesure 7 produit en ligne les quantités $B_j$. Un premier module de caractérisation 11 produit en permanence des valeurs $U_{\tau,i}$ caractérisant le trafic passé sur des fenêtres d'observation T1 consécutives. Ce module de caractérisation 11 met en oeuvre la méthode de caractérisation en ligne décrite plus haut, à partir des quantités $B_j$ qui lui sont fournies par le module de mesure 7.

Les valeurs $U_{\tau,i}$ sont fournies en entrée de moyens de prédiction 100 comprenant un réseau de neurones 110. Ces moyens 100 produisent une valeur prédite $D_i$ de la courbe d'arrivée du trafic 5 sur une fenêtre de prédiction déterminée, à partir d'une série des dernières valeurs $U_{\tau,i}$. Toutes les valeurs $U_{\tau,i}$ caractérisant le trafic passé ne sont donc pas prises en compte, mais seulement les plus récentes. Ces valeurs $U_{\tau,i}$ en entrée des unités de la couche d'entrée du réseau de neurones 110, dont la couche de sortie ne comporte qu'une seule unité, qui délivre la valeur $D_i$. Cette valeur est homogène à un débit. Elle correspond à la valeur maximum du débit du trafic de la communication sur la prochaine fenêtre de prédiction Tp.

Le réseau de neurones 110 comporte une cellule d'apprentissage. Celle-ci comprend un réseau de neurones « apprenti » 110a de même structure que le réseau de neurones 110. Le réseau de neurones 110 est entraîné en permanence. A cet effet, le dispositif comprend un module d'apprentissage 200, qui entraîne en permanence le réseau de neurones à partir de la série de valeurs observée $U_{\tau,i}$. Cet apprentissage continu affecte en réalité le réseau de neurones « apprenti » 110a de la cellule d'apprentissage. En effet, les paramètres du réseau de neurones 110 sont figés en sorte qu'ils ne sont pas modifiés par l'apprentissage en tant que tel. Cependant, le module d'apprentissage 200 compare en permanence les performances du réseau de neurones 110 à celles du réseau de neurones « apprenti » 110a, les paramètres du réseau de neurones « apprenti » 110a étant recopiés dans le réseau de neurones 110, sous la commande du module d'apprentissage 200, lorsque les performances du premier sont meilleures que celles du second.

Pour permettre l'apprentissage, les valeurs $U_{\tau,i}$ délivrées par le module de caractérisation 11 sont sauvegardées dans une première base de données 21. De là, elles sont ensuite fournies en entrée du réseau de neurones « apprenti » 110a pour l'apprentissage. L'apprentissage consiste à optimiser le jeu de poids $W_m$ du réseau de neurones « apprenti » 110a en produisant une valeur $D'_i$ caractérisant le trafic sur la prochaine fenêtre de prédiction Tp à l'aide du réseau de neurones « apprenti » 110a, et en comparant cette valeur $D'_i$ à une valeur correspondante $D''_i$ fournie

par « un oracle ». Cette comparaison se fait via une « fonction de coût » dont la forme est détaillée plus loin. Le module 200 détermine alors les performances du réseau de neurones « apprenti » 110a en comparant les valeurs $D'_i$ et $D''_i$. Le module 200 détermine aussi les performances du réseau de neurones 110 en comparant la valeur $D_i$ délivrée par ce dernier pour la même fenêtre de prédiction Tp, et la valeur $D''_i$ correspondante.

Un « oracle » a pour fonction de délivrer des valeurs $D''_i$ correspondant aux valeurs prédites $D_i$ ou $D'_i$. Les valeurs $D''_i$ correspondent aux valeurs $D_i$ ou $D'_i$ en ce sens qu'elles leur sont comparables, comme caractérisant le trafic sur des mêmes fenêtres temporelles.

Dans un mode de réalisation conforme au dispositif de la figure 2, un « oracle » est réalisé de la manière suivante. Le dispositif comprend un second module de caractérisation 12 qui génère une série de valeur $U''_{\tau,i}$ caractérisant le trafic 5 sur des secondes fenêtres d'observation T2. A cet effet, le module 12 reçoit également les quantités $B_j$ délivrées par le module de mesure 7. De même que le premier module 11, le second module 12 met en oeuvre la méthode de caractérisation décrite plus haut. Les valeurs $U''_{\tau,i}$ sont sauvegardées dans une seconde base de données 22. Par souci de clarté, les valeurs lues dans la base de données 22 sont notées $D''_i$ bien qu'elles correspondent aux valeurs $U''_{\tau,i}$. Les fenêtres d'observation T2 coïncident avec les fenêtres de prédiction Tp antérieures. La base de données 22 se comporte donc comme un « oracle », en ce sens qu'elle contient des valeurs caractérisant le trafic passé réellement observé, qui sont comparables aux valeurs prédites $D_i$ correspondantes délivrées par le réseau de neurones 110 et aux valeurs prédites délivrées les moyens de prédiction 100a.

A la figure 3, on a représenté schématiquement un dispositif pour la mise en oeuvre du procédé selon un mode de réalisation préféré de l'invention.

Dans ce mode de réalisation, les fenêtres d'observation T1 coïncident avec les fenêtres de prédiction Tp passées. Cela simplifie le procédé et le dispositif selon l'invention car les informations $U_{\tau,i}$ caractérisant le trafic 5 sur les fenêtres d'observation T1 respectives peuvent directement alimenter la base de données 22 de l'oracle. En effet, elles peuvent ultérieurement être comparées aux valeurs prédites $D_i$ du débit maximum du trafic 5 sur les fenêtres de prédiction correspondantes, pour l'apprentissage en ligne du réseau de neurones. Les fonctions des modules de caractérisation 11 et 12 du dispositif de la figure 2 sont donc assurées par un unique module de caractérisation 10 de même nature que ces derniers. Ce module met donc en oeuvre la méthode de caractérisation précitée pour produire les informations $U_{\tau,i}$. Celles-ci sont sauvegardées dans la base de données 22. Par souci de clarté, les informations lues dans la base données 22 sont toujours notées $D''_i$, bien qu'elles correspondent aux valeurs $U_{\tau,i}$.

Le mode de réalisation de la figure 3 se distingue en outre de celui de la figure 2, en ce que les moyens de prédiction 100 comprennent, outre le réseau de neurones 110 et sa cellule d'apprentissage avec le réseau de neurones « apprenti » 110a, une batterie 120 de n filtres de prédiction F1 à Fn ayant des fenêtres de filtrage (profondeur de filtrage) différentes. Ces filtres ont pour fonction de produire des informations intermédiaires caractérisant le trafic 5 sur la prochaine fenêtre de prédiction Tp à partir d'une série d'informations $U_{\tau,i}$ caractérisant le trafic passé sur des fenêtres d'observation T1 respectives. A cet effet, les filtres F1 à Fn sont nourris chacun par les informations $U_{\tau,i}$, qui sont produites et délivrées par le module de caractérisation 10. Le vecteur Vi composé des valeurs de sortie $DF1_i$ à $DF_{ni}$ respectivement des filtres F1 à Fn aux instants déterminés to, to+Tp, to+2.Tp, ... est transmis en entrée du réseau de neurones 110, qui produit alors la valeur $D_i$ à partir de ces valeurs. En outre, le vecteur Vi est sauvegardé dans la base de données 21 pour l'apprentissage en ligne du réseau de neurones.

Dans un exemple, l'horizon de prédiction Tp est fixé à 10 secondes en sorte que la largeur des fenêtres Tp, et donc celle des fenêtres d'observations T1, sont égales à 10 secondes. De plus, la batterie de filtres 120 comprend cinq filtres (n=5) F1 à F5 dont les profondeurs de filtrage respectives sont fixées à respectivement 10, 30, 50, 80 et 120 fois la largeur des fenêtres d'observation T1. De la sorte, une série de dix valeurs consécutives $U_{\tau,i}$ entrent dans la fenêtre de filtrage du filtre F1, une série de trente valeurs $U_{\tau,i}$ entrent dans la fenêtre de filtrage du filtre F2, etc.

La batterie de filtres 120 a pour fonction d'assurer un pré-traitement des informations $U_{\tau,i}$ caractérisant le trafic passé. Ce pré-traitement permet aux moyens de prédiction 100 d'offrir des performances satisfaisantes, tout en comprenant un réseau de neurones 110 de structure assez simple. Plus la structure du réseau de neurones 110 est simple et moins il comporte de poids dont les valeurs doivent être déterminées par apprentissage du réseau de neurones, et donc plus l'apprentissage est rapide. Le pré-traitement effectué par la batterie de filtres 120 permet donc d'employer un réseau de neurones de structure assez simple, dont l'apprentissage est suffisamment rapide pour être réalisé en permanence, sans sacrifier les performances des moyens de prédiction en termes de précision de la prédiction. Dit autrement, le pré-traitement par la batterie de filtres prédicteurs permet de résoudre le compromis entre des performances élevées des moyens de prédiction (qui supposent, sans le pré-traitement proposé par l'invention, un réseau de neurones de structure relativement complexe, donc avec beaucoup de poids) et rapidité de l'apprentissage du réseau de neurones (qui suppose un réseau de neurones de structure relativement simple, avec relativement peu de poids).

Des essais ont permis de montrer que, dans l'exemple susmentionné d'une batterie de filtres 120 comprenant cinq filtres, un réseau de neurones constitué d'un perceptron simple (réseau de neurones à une couche d'entrée et une couche de sortie, sans aucune couche cachée) est suffisant pour obtenir des performances satisfaisantes. Dans cet exemple, la couche d'entrée du réseau de neurones comporte six unités : cinq entrées reliées respectivement à la sortie des cinq filtres F1 à Fn pour recevoir les valeurs intermédiaires respectivement $DF1_i$ à $DF5_i$, et une sixième entrée pour le biais du réseau de neurones. En outre, la couche de sortie ne comporte qu'une unité, qui délivre la valeur $D_i$. Ainsi, le réseau de neurones ne comporte que six poids $W_m$, où m est un indice compris entre 1 et 6. Il est donc effectivement rapide à entraîner. On a également testé d'autres architectures de perceptron avec une couche cachée, celle-ci comprenant deux à cinq unités, sans constater d'amélioration sensible des performances en terme de précision de la prédiction. C'est pourquoi on préfère l'utilisation d'une perception simple, dont l'apprentissage est le plus rapide.

De préférence, les filtres prédicteurs F1 à Fn sont des filtres de Kalman, ayant des profondeurs de filtrage respectives différentes. Les filtres de Kalman sont en effet simples à mettre en oeuvre. De plus, ils ont un faible coût calculatoire. En outre, ils permettent de poursuivre efficacement un processus éventuellement non stationnaire comme c'est le cas par exemple pour le trafic d'une communication sur un réseau de télécommunications. Toutefois, d'autres types de filtres de prédiction peuvent être utilisés, par exemple un filtre opérant une simple moyenne arithmétique de la série d'informations entrant dans la fenêtre de filtrage du filtre, ou un filtre réalisant une moyenne exponentielle de ces valeurs.

La mise en oeuvre d'un filtre de Kalman nécessite de faire une hypothèse sur la relation entre les informations de l'espace d'entrée et celles de l'espace de sortie. Cette relation est linéaire dans le cas du filtre de Kalman classique, et non linéaire dans le cas du filtre de Kalman généralisé (« Extended Kalman Filter » en anglais). Dans l'exemple, les informations de l'espace d'entrée des filtres de prédiction F1, F2, F3, F4 et F5 sont constituées par les séries de respectivement 10, 30, 50, 80 et 120 informations $U_{\tau,i}$. On fait l'hypothèse que ces séries sont des réalisations d'une variable aléatoire gaussienne respective, dont la moyenne $\mu_m$ et la variance $\sigma_m^2$, où m est un indice compris entre 1 et n, sont estimées en ligne par les filtres de Kalman respectifs. Dans un exemple, une information $DF1_i$ à $DFn_i$ en sortie du filtre de Kalman respectivement F1 à Fn, est alors donnée par :

$$DFm_i = \mu_m \qquad\qquad (4)$$

Ainsi, l'information $DFm_i$ est la moyenne gaussienne $\mu_m$ des informations $U_{\tau,i}$ qui entrent dans la fenêtre de filtrage du filtre Fm considéré. Plus concrètement, il s'agit d'une estimation du débit maximum du trafic sur la prochaine fenêtre de prédiction Tp.

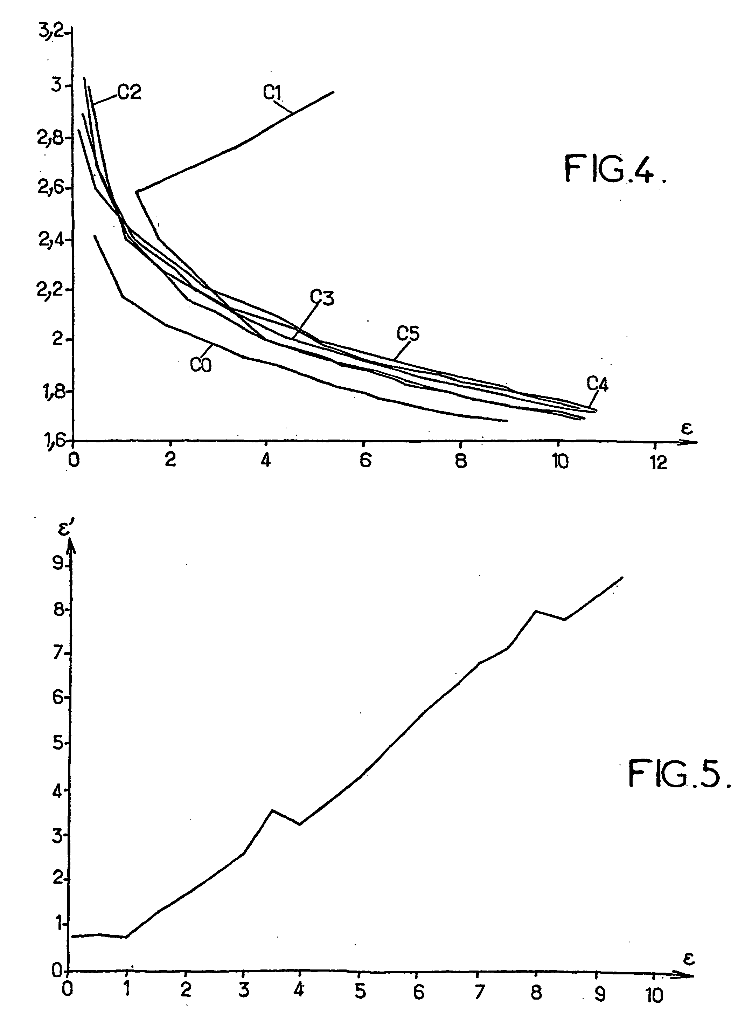

Si l'on était en mesure de déterminer une taille de fenêtre de filtrage optimale, les moyens de prédiction 100 pourraient à la rigueur ne comprendre qu'un seul filtre de Kalman, sans réseau de neurones. Néanmoins, ceci n'est pas le cas, comme le montre les courbes C1 à C5 du graphique de la figure 4. Pour une trace déterminée, ces courbes représentent, en fonction du taux d'erreurs de prédiction $\varepsilon$ visé (exprimé en pourcentage de prédictions erronées), les valeurs du débit maximum du trafic (exprimé en Mbits/s), telles que prédites par les filtres de prédiction respectivement F1 à F5. Or on voit que la meilleure prédiction (c'est à dire la valeur prédite du débit maximum du trafic qui est la plus faible, n'est pas obtenue avec le même filtre de prédiction, selon la valeur de $\varepsilon$ considérée. De la même façon, des analyses montrent que, pour une valeur de $\varepsilon$ déterminée, la meilleure prédiction n'est pas obtenue avec le même filtre de Kalman selon la trace considérée. C'est pourquoi un filtre de Kalman ne peut à lui seul constituer les moyens de prédiction du trafic. Ces remarques ne sont d'ailleurs pas propres aux filtres de Kalman mais s'appliquent à tous les filtres de prédiction, car c'est un problème lié à la profondeur de filtrage des filtres de prédiction, quel qu'en soit le type.

C'est pourquoi, dans le mode de réalisation de la figure 3, le réseau de neurones 110 a pour fonction de combiner les valeurs intermédiaires $DFm_i$ caractérisant le trafic sur la prochaine fenêtre de prédiction, pour m compris entre 1 et n. La courbe C0 de la figure 4 représente, pour ladite trace déterminée, en fonction du taux d'erreurs de prédiction $\varepsilon$ visé, les valeurs du débit maximum du trafic, telles que prédites par le réseau de neurones 110 à partir des valeurs intermédiaires $DF1_i$ à $DF5_i$ qui sont produites par les filtres de prédiction respectivement F1 à F5. Comme on le voit, quelle que soit la valeur de $\varepsilon$ considérée, la valeur de la courbe C0 est inférieure à celles correspondante des courbes C1 à C5. Les performances du réseau de neurones ainsi nourri en entrée par les valeurs intermédiaires produites par les filtres F1 à F5 sont meilleures que celles de chacun des filtres F1 à F5 pris individuellement.

L'apprentissage permanent du réseau de neurones 110 permet de ne donner un poids significatif, qu'à celle ou celles de ces valeurs intermédiaires qui sont les meilleures en fonction des circonstances liées au trafic. Dit autrement, l'apprentissage permanent du réseau de neurones 110 permet de ne retenir et de combiner, que le (ou les) filtre(s) de prédiction parmi les filtres F1 à Fn qui est (sont) le(s) plus adapté(s), en fonction des circonstances liées au trafic.

Une base d'apprentissage est composée de couples de valeurs $(U_{\tau,i}, D''_i)$ dans l'exemple de la figure 2, ou de couples de valeurs $(V_i, D''_i)$ dans l'exemple de la figure 3, ces couples de valeurs étant appelés motifs d'apprentissage dans le jargon de l'homme de l'art et dans la suite. Dans chaque motif d'apprentissage, la première valeur correspond à la seconde valeur, au sens indiqué plus haut. Ces valeurs sont toutes des valeurs caractérisant le trafic sur des fenêtres temporelles comprises à l'intérieur d'une fenêtre du passé considérée pour l'apprentissage. Les premières valeurs de chaque motif d'apprentissage sont lues dans la base de données 21 et les secondes sont lues dans la base de données 22. La structure des bases de données permet d'établir la correspondance entre la première et la seconde valeur de chaque motif d'apprentissage.

L'apprentissage repose sur la technique dite de « minimisation du risque structurel, » dans le jargon de l'homme du métier. Elle consiste à séparer la base d'apprentissage en deux ensembles distincts, par exemple par tirage aléatoire :

- un ensemble d'apprentissage qui sert à entraîner le réseau de neurones « apprenti » 110a, cet apprentissage se faisant en appliquant les motifs d'apprentissage et en optimisant le jeu de poids pour obtenir la meilleure performance, étant entendu que chaque motif peut être appliqué plusieurs fois, jusqu'à ce que l'apprentissage s'arrête dans les conditions ci-dessous ;
- un ensemble de validation qui sert à évaluer les performances du réseau de neurones « apprenti » 110a, et les performances du réseau de neurones prédicteur 110, l'apprentissage du réseau de neurones « apprenti » s'arrêtant quand ses performances se dégradent sur l'ensemble de validation, et les poids du réseau de neurones prédicteur 110 étant remplacés par ceux du réseau de neurones « apprenti » 110a lorsque les performances du second sont meilleures que celles du premier sur ce même ensemble de validation.

De plus amples informations sur la technique dite de « minimisation du risque structurel » peuvent être trouvées dans l'ouvrage de V. VAPNIK, « The Nature of Statistical Learning Theory », Springer-Verlag, Berlin.

De plus, un pré-traitement est appliqué aux motifs d'apprentissage $(U_{\tau,i}, D''_i)$ ou $(V_i, D''_i)$ de façon à les normaliser. Cette normalisation fait appel à une fonction de normalisation F appliquée aux valeurs $U_{\tau,i}$ ou $V_i$ et à une fonction de normalisation G appliquée aux valeurs $D''_i$. Ces fonctions peuvent. être identiques mais ce n'est pas forcément le cas. Dans un exemple, elles sont définies en fonction d'une variable x, par :

$$F(x) = \text{Log}_{10}\left(\frac{x}{xmax/10}\right) \tag{5}$$

$$G(x) = 2 \times \frac{x}{xmax} - 1 \tag{6}$$

Où $x_{max}$ désigne la valeur maximum que peut prendre la variable x. Dans le cadre de l'inventions, $x_{max}$ désigne la valeur maximum que peut prendre le débit du trafic. Cette valeur dépend bien entendu de l'application. Dans l'exemple, du trafic d'une communication sur un réseau de télécommunications, une valeur typique du débit maximum est actuellement égale à 10 Mbits/s. On voit que la fonction G ci-dessus permet de normaliser les valeurs de $D''_i$ entre -1 et +1, ce qui garantit une bonne définition de la fonction de coût proposée (voir plus loin).

De préférence, les valeurs $U_{\tau,i}$ ou $V_i$ sauvegardées dans la base de données 21 sont les valeurs ainsi normalisées. De même, les valeurs $D''_i$ sauvegardées dans la base de données 22 sont les valeurs ainsi normalisées. De la sorte, un motif d'apprentissage est constitué de valeurs normalisées.

Le module d'apprentissage est par exemple réalisé sous la forme d'un logiciel. Dans un exemple, le module d'apprentissage 200 met en oeuvre un algorithme standard de rétro-propagation de l'erreur avec, pour fonction de coût, une fonction contenant le paramètre α précité, qui détermine le taux d'erreur de prédiction ε visé. Cette fonction de coût F est par exemple la suivante :

$$F = (D''_i - D'_i)^2 + \alpha.\text{Log}\,[1+(1+D'_i)/(1+D''_i)] \tag{7}$$

Le premier terme représente le coût quadratique standard $(D''_i - D'_i)^2$. Le second terme contient un paramètre α dont la valeur peut être réglée en fonction d'un objectif dé précision de la prédiction exprimée en termes de taux d'erreur de prédiction. Ce paramètre est de préférence modifiable dynamiquement, en fonction du taux d'erreur visé ε. A cet effet, le taux d'erreur visé ε est délivré aux moyens d'apprentissage 200 comme paramètre de commande. Le paramètre α permet de régler le pessimisme de la prédiction pour obtenir un taux d'erreur réel déterminé. La valeur du paramètre α qu'il faut utiliser pour l'apprentissage du réseau de neurones afin d'obtenir le taux d'erreur de prédiction ε visé peut être déterminée selon la méthode suivante. Cette méthode est mise en oeuvre par le module d'apprentissage 200.

Supposons que la valeur courante du paramètre soit égale à $\alpha_o$. Sur une fenêtre du passé suffisamment grande, on calcule les valeurs du rapport $R_i = (1+D'_i)/(1+D''_i)$ sur l'ensemble des motifs d'apprentissage de cette fenêtre.

On ordonne ensuite ces valeurs selon un ordre croissant, les plus faibles correspondant aux motifs d'apprentissage pour lesquels la prédiction par le réseau de neurones « apprenti » 110a a été la plus risquée, en ce sens que l'écart entre la valeur caractéristique du trafic qui a été réellement observée sur une fenêtre temporelle déterminée du passé et la valeur qui avait été prédite par le réseau 110a pour cette fenêtre temporelle était le plus petit (voire négatif). On sélectionne alors le motif d'apprentissage déterminé qui correspond au taux d'erreur de prédiction $\varepsilon$ visé, et on donne à une variable R la valeur du rapport $R_i$ correspondant. Par exemple, si on a mille motifs d'apprentissage, le motif d'apprentissage déterminé serait, pour un taux d'erreur $\varepsilon$ visé égal à 1%, le dixième de la liste ordonnée. Déterminer la valeur du paramètre $\alpha$ qui permet d'obtenir le taux d'erreur de prédiction $\varepsilon$ visé, revient alors à chercher la valeur de $\alpha$, différente de $\alpha_o$, qui pour ledit motif d'apprentissage déterminé, aurait donné la valeur 1 à la variable R. Ceci revient à dire que $\alpha$ est donné par :

$$\alpha = \alpha_o.\mathrm{Log}(1+R)/\mathrm{Log}(2) \tag{8}$$

Sur le graphique de la figure 5, la courbe montre, pour une trace déterminée, le taux d'erreur de prédiction réel $\varepsilon'$ obtenu avec la méthode de détermination du paramètre $\alpha$ décrite ci-dessus, en fonction du taux d'erreur de prédiction visé $\varepsilon$. Comme on le voit sur ce graphique, le taux réel $\varepsilon'$ obtenu est pratiquement égal au taux visé $\varepsilon$, quelle que soit la valeur de celui-ci. Ceci montre l'efficacité de la méthode ci-dessus de réglage du taux d'erreur de prédiction $\varepsilon$ visé à l'aide du paramètre $\alpha$. La valeur du paramètre $\alpha$ peut être modifiée dynamiquement (i.e., en ligne), sans garantie toutefois concernant les performances des moyens de prédiction pendant une période transitoire consécutive à cette modification.

Ainsi qu'on l'aura compris, les caractéristiques du dispositif qui déterminent la largeur des fenêtres de prédiction (i.e., l'horizon de prédiction) et la largeur de la ou des fenêtres d'observation T1 et/ou T2, n'apparaissent pas au niveau du réseau de neurones 110. Ces paramètres du dispositif sont en fait déterminés par les caractéristiques des modules de caractérisation 11 et/ou 12, des filtres F1 à Fn, et par la taille des moyens de stockage constitués par les bases de données. Ils peuvent également être modifiés dynamiquement (i.e., en ligne), sans garantie non plus concernant les performances des moyens de prédiction pendant une période transitoire consécutive à cette modification.

Dans la description d'un mode de réalisation préféré de l'invention qui précède, on a choisi comme une valeur caractérisant le trafic passé sur une première fenêtre d'observation T1 ou T2 qui est une approximation supérieure de la quantité de données reçues pendant un intervalle de temps $\tau$ de durée déterminée sur ladite fenêtre d'observation T1 ou T2, produite à partir de quantités de données $B_j$ reçues sur des intervalles de temps déterminés $\theta$ respectifs. De préférence, le rapport entre la largeur de la fenêtre d'observation T1 ou T2 et la durée de l'intervalle de temps $\tau$ est compris entre 10 et 100. De telles valeurs permettent d'obtenir une caractérisation du trafic passé avec une précision suffisante, sans impliquer des temps de calculs incompatibles avec l'application. De même, le rapport entre la durée de l'intervalle de temps $\tau$ et celle de l'intervalle de temps $\theta$ est compris entre 10 et 100. De telles valeurs permettent d'obtenir avec une précision suffisante, respectivement une caractérisation du trafic passé et une approximation de la valeur de la courbe d'arrivée du trafic passé avec une précision suffisante, sans impliquer des temps de calculs incompatibles avec l'application.

A la figure 6, on a représenté un exemple d'application d'un dispositif selon l'invention. Un dispositif de prédiction de trafic 1 conforme au schéma de la figure 2 ou de la figure 3, est compris dans une interface de noeud de réseau (NNI) 2 pour l'interconnexion d'un réseau local 3 (LAN) à un réseau de télécommunications 4 tel qu'un réseau ATM (où un réseau IP).

**Revendications**

1. Procédé de prédiction, sur des fenêtres de prédiction (Tp) successives, d'un trafic (5) sur un réseau de télécommunications, suivant lequel :

   a) on produit en permanence des informations ($U_{\tau,i}$) caractérisant le trafic passé sur des premières fenêtres d'observation (T1) respectives ;
   b) à des instants ($t_o$, to+Tp, to+2.Tp,...) déterminés, on produit une information ($D_i$) caractérisant le trafic sur une prochaine fenêtre de prédiction (Tp), à l'aide de moyens de prédiction (100) comprenant un réseau de neurones (110), et à partir d'une série desdites informations ($U_{\tau,i}$) caractérisant le trafic passé ;
   c) on entraîne le réseau de neurones (110) en permanence, en comparant les performances du réseau de neurones (110) à celles d'un réseau de neurones « apprenti » (110a) ayant la même structure que le réseau de neurones, les paramètres du réseau de neurones « apprenti » (110a) étant recopiés dans le réseau de neurones (110) lorsque les performances du premier sont meilleures que celles du second ;

suivant lequel l'étape b) comprend les étapes consistant à :

b1) produire en parallèle, n informations intermédiaires (Vi) caractérisant le trafic sur la prochaine fenêtre de prédiction (Tp), à l'aide de n filtres respectifs (F1-Fn) des moyens de prédiction (100), ces filtres (F1-Fn) ayant des fenêtres de filtrage respectives différentes et étant nourris chacun par la série d'informations $(U_{\tau,i})$ caractérisant le trafic passé ; et,

b2) produire ladite information $(D_i)$ caractérisant le trafic sur la prochaine fenêtre de prédiction (Tp) à l'aide du réseau de neurones (110) recevant en entrée les n séries d'informations intermédiaires $(V_i)$ caractérisant le trafic sur la prochaine fenêtre de prédiction (Tp),

et suivant lequel l'étape c) comprend l'entraînement du réseau de neurones à partir de séries respectives desdites n informations intermédiaires $(V_i)$ caractérisant le trafic sur la prochaine fenêtre de prédiction (Tp).

2. Procédé selon la revendication 1, suivant lequel lesdites informations intermédiaires $(V_i)$ caractérisant le trafic sur la prochaine fenêtre de prédiction (Tp) sont sauvegardées dans une première base de données (21).

3. Procédé selon la revendication 2, suivant lequel, à l'étape c), les séries respectives desdites n informations intermédiaires $(V_i)$ caractérisant le trafic sur la prochaine fenêtre de prédiction (Tp) sont lues dans la première, base de données (21).

4. Procédé selon l'une quelconque des revendications 1 à 3, suivant lequel, on produit en outre des informations $(U''_{\tau,i})$ caractérisant le trafic passé sur des secondes fenêtres d'observation (T2) respectives, qui coïncident avec les fenêtres de prédiction (Tp) précédentes.

5. Procédé selon la revendication 4, suivant lequel, lesdites informations $(U''_{\tau,i})$ caractérisant le trafic passé sur lesdites secondes fenêtres d'observation (T2) respectives, sont sauvegardées dans une seconde base de données (22).

6. Procédé selon l'une quelconque des revendications 1 à 3, suivant lequel lesdites premières fenêtres d'observation (T1) coïncident avec les fenêtres de prédiction (Tp) précédentes et suivant lequel lesdites valeurs $(U_{\tau,i})$ caractérisant le trafic passé sur lesdites premières fenêtres d'observation (T1 ) respectives sont sauvegardées dans une seconde base de données (22).

7. Procédé selon la revendication 5 ou selon la revendication 6, suivant lequel, à l'étape c), on entraîne le réseau de neurones (110), à partir en outre d'une série de valeurs $(U_{\tau,i}, U''_{\tau,i})$ caractérisant le trafic passé sur lesdites fenêtres de prédiction (Tp) précédentes, qui sont lues dans la seconde base de données (22).

8. Procédé selon l'une quelconque des revendications précédentes, suivant lequel les filtres (F1-Fn) sont des filtres de Kalman.

9. Procédé selon l'une quelconque des revendications précédentes, suivant lequel le réseau de neurones est un perceptron simple.

10. Procédé selon l'une quelconque des revendications précédentes, suivant lequel, à l'étape c), on met en oeuvre un algorithme de rétro-propagation de l'erreur avec, pour fonction de coût, une fonction contenant un paramètre $(\alpha)$ déterminant un taux d'erreur de prédiction visé.

11. Procédé selon la revendication 10, dans lequel ledit paramètre est modifiable dynamiquement.

12. Procédé selon l'une quelconque des revendications précédentes, suivant lequel une valeur caractérisant le trafic passé sur une première fenêtre d'observation (T1) ou sur une seconde fenêtre d'observation (T2) est une approximation supérieure de la quantité de données reçues pendant un intervalle de temps $(\tau)$ de durée déterminée sur ladite fenêtre d'observation (T1,T2), produite à partir de quantités de données $(B_j)$ reçues sur des intervalles de temps déterminés $(\theta)$ respectifs.

13. Procédé selon la revendication 12, suivant lequel le rapport entre la largeur de ladite fenêtre d'observation (T1,T2) et la durée dudit intervalle de temps ($\tau$) est compris entre 10 et 100.

**14.** Dispositif de prédiction, sur des fenêtres de prédictions (Tp) successives, d'un trafic (5) sur un réseau de télécommunications, comprenant :

- des moyens de caractérisation (10, 11, 12) du trafic passé produisant en permanence des informations ($U_{\tau,i}$) caractérisant le trafic passé sur des fenêtres d'observation (T1 ) respectives ;
- des moyens de prédiction (100) contenant un réseau de neurones (110), et produisant, à des instants (to, to+Tp, to+2.Tp, ...), une information ($D_i$) caractérisant le trafic sur une prochaine fenêtre de prédiction (Tp), à partir d'une série desdites valeurs ($U_{\tau,i}$) caractérisant le trafic passé ;
- des moyens d'apprentissage (200) entraînant le réseau de neurones (110) en permanence, lesdits moyens d'apprentissage comprenant des moyens pour comparer les performances du réseau de neurones (110) à celles d'un réseau de neurones « apprenti » (110a) ayant la même structure que le réseau de neurones, et des moyens pour recopier les paramètres du réseau de neurones « apprenti » (110a) dans le réseau de neurones (110) lorsque les performances du premier sont meilleures que celles du second ;

dans lequel les moyens de prédiction (100) comprennent en outre n filtres de prédiction (F1-Fn) ayant des fenêtres de filtrage respectives différentes, étant nourris chacun par ladite série d'information ($U_{\tau,i}$) caractérisant le trafic passé, et produisant audits instants déterminés (to, to+Tp, to+2.Tp,...) n informations intermédiaires respectives ($DF1_i$-$DFn_i$) caractérisant le trafic sur la prochaine fenêtre de prédiction (Tp), qui sont délivrées en entrée du réseau de neurones (110),
et dans lequel les moyens d'apprentissage entraînent le réseau de neurones à partir de séries respectives desdites n informations intermédiaires (Vi) caractérisant le trafic sur la prochaine fenêtre de prédiction (Tp).

**15.** Dispositif selon la revendication 14, dans lequel le réseau de neurones (110) est un perceptron simple.

**16.** Dispositif selon la revendication 14 ou la revendication 15, dans lequel les filtres de prédiction (F1-Fn) sont des filtres de Kalman.

**17.** Interface de noeud de réseau (2) pour l'interconnexion d'un réseau local (3) à un réseau de télécommunications (4), comprenant un dispositif (1) selon l'une quelconque des revendications 14 à 16.

**18.** Réseau de télécommunications (4) comprenant une interface de noeud de réseau (2) selon la revendication 17.

**Patentansprüche**

**1.** Verfahren zur Vorhersage in aufeinanderfolgenden Vorhersagefenstern (Tp) von Verkehr (5) in einem Telekommunikationsnetzwerk, gemäß dem:

a) man fortlaufend Informationen ($U_{\tau,i}$) erzeugt, welche den Verkehr charakterisieren, der jeweils in ersten Beobachtungsfenstern (T1) abgelaufen ist;
b) man zu festgelegten Zeitpunkten ($t_0$, $t_0$+Tp, $t_0$+2.Tp, ...) eine den Verkehr in einem nächsten Vorhersagefenster ($T_p$) charakterisierende Information ($D_i$) unter Zuhilfenahme von Vorhersagemitteln (100) erzeugt, die ein neuronales Netzwerk (110) umfassen, und ausgehend von einer Folge der besagten Informationen ($U_{\tau,i}$), die den abgelaufenen Verkehr charakterisieren;
c) man fortlaufend das neuronale Netzwerk (110) trainiert, indem man die Leistungen des neuronalen Netzwerkes (110) mit denjenigen eines "angelernten" neuronalen Netzwerkes (110a) vergleicht, das den gleichen Aufbau wie des neuronale Netzwerk besitzt, wobei die Parameter des "angelernten" neuronalen Netzwerkes (110a) in das neuronale Netzwerk (110) übertragen werden, wenn die Leistungen des Ersten besser als diejenigen des Zweiten sind;

und gemäß dem Schritt b) die Schritte umfasst, welche Folgendes enthalten:

b1) paralleles Erzeugen von n Zwischeninformationen ($V_i$), welche den Verkehr im nächsten Vorhersagefenster (Tp) charakterisieren, unter Zuhilfenahme von jeweils n Filtern ($F_1$ - $F_n$) der Vorhersagemittel (100), wobei diese Filter ($F_1$ - $F_n$) jeweils unterschiedliche Filterfenster aufweisen und jedes von der Informationsfolge ($U_{\tau,i}$) gespeist wird, die den abgelaufenen Verkehr charakterisiert; und

b2) Erzeugen der besagten, den Verkehr im nächsten Vorhersagefenster (Tp) charakterisierenden Information (D$_i$) unter Zuhilfenahme des neuronalen Netzwerks (110), welches eingangsseitig die n Folgen von Zwischeninformationen (V$_i$) empfängt, welche den Verkehr in dem nächsten Vorhersagefenster (Tp) charakterisieren, und gemäß dem der Schritt c) das Trainieren des neuronalen Netzwerkes durch die jeweiligen Folgen der besagten n Zwischeninformationen (V$_i$) umfasst, welche den Verkehr im nächsten Vorhersagefenster (Tp) charakterisieren.

2. Verfahren gemäß Anspruch 1, gemäß dem die besagten Zwischeninformationen (V$_i$), welche den Verkehr in dem nächsten Vorhersagefenster (Tp) charakterisieren, in einer ersten Datenbank (21) gespeichert werden.

3. Verfahren gemäß Anspruch 2, gemäß dem in Schritt c) die jeweiligen Folgen der besagten n Zwischeninformationen (V$_i$), welche den Verkehr im nächsten Vorhersagefenster (T$_p$) charakterisieren, in der ersten Datenbank (21) gelesen werden.

4. Verfahren gemäß einem der Ansprüche 1 bis 3, gemäß dem man außerdem Informationen (U''$_{\tau, i}$) erzeugt, welche den abgelaufenen Verkehr in jeweils zweiten Beobachtungsfenstern (T$_2$) charakterisieren, die mit den vorhergehenden Voraussagefenstern (Tp) übereinstimmen.

5. Verfahren gemäß Anspruch 4, gemäß dem die besagten Informationen (U''$_{\tau, i}$), welche den abgelaufenen Verkehr in den jeweils zweiten Vorhersagefenstern (T$_2$) charakterisieren, in einer zweiten Datenbank (22) gespeichert werden.

6. Verfahren gemäß einem der Ansprüche 1 bis 3, gemäß dem die besagten ersten Beobachtungsfenster (T$_1$) mit den vorhergehenden Vorhersagefenstern (Tp) übereinstimmen und gemäß dem die besagten Werte (U$_{\tau, i}$), welche den abgelaufenen Verkehr in den besagten jeweils ersten Beobachtungsfenstern (T$_1$) charakterisieren, in einer zweiten Datenbank (22) gespeichert werden.

7. Verfahren gemäß Anspruch 5 oder gemäß Anspruch 6, bei dem man in Schritt c) das neuronale Netzwerk (110) ferner durch eine Reihe von Werten (U$_{\tau, i}$, U''$_{\tau, i}$) trainiert, welche den abgelaufenen Verkehr in den besagten vorhergehenden Vorhersagefenstern charakterisieren und die in der zweiten Datenbank (22) gelesen werden.

8. Verfahren gemäß einem der vorhergehenden Ansprüche, gemäß dem die Filter (F$_1$ - F$_n$) Kalman-Filter sind.

9. Verfahren gemäß einem der vorhergehenden Ansprüche, gemäß dem das neuronale Netzwerk ein einfaches Perceptron ist.

10. Verfahren gemäß einem der vorhergehenden Ansprüche, gemäß dem man in Schritt c) einen Fehlerzurückverfolgungsalgorithmus einsetzt, der als Kostenfunktion eine Funktion besitzt, die einen Parameter ($\alpha$) enthält, der eine angestrebte Vorhersagefehlerquote bestimmt.

11. Verfahren gemäß Anspruch 10, gemäß dem der besagte Parameter dynamisch änderbar ist.

12. Verfahren gemäß einem der vorhergehenden Ansprüche, gemäß dem ein Wert, der den abgelaufenen Verkehr in einem ersten Beobachtungsfenster (T$_1$) oder einem zweiten Beobachtungsfenster (T$_2$) charakterisiert, eine obere Näherung der während eines Zeitintervalls ($\tau$), dessen Dauer im besagten Beobachtungsfenster (T$_1$, T$_2$) festgelegt ist, empfangenen Datenmenge ist, welche durch die Datenmengen (Bj) erzeugt wird, welche in jeweils bestimmten Zeitintervallen ($\theta$) empfangen wurden.

13. Verfahren gemäß Anspruch 12, bei dem das Verhältnis zwischen der Größe des besagten Beobachtungsfensters (T$_1$, T$_2$) und der Dauer des besagten Zeitintervalls ($\tau$) zwischen 10 und 100 liegt.

14. Vorrichtung zur Vorhersage in aufeinanderfolgenden Vorhersagefenstern (Tp) von Verkehr (5) in einem Telekommunikationsnetzwerk, umfassend:

- Charakterisierungsmittel (10, 11, 12) für abgelaufenen Verkehr, die fortlaufend Informationen (U$_{\tau, i}$) erzeugen, welche den abgelaufenen Verkehr in jeweiligen Beobachtungsfenstern (T$_1$) charakterisieren;
- Vorhersagemittel (100), enthaltend ein neuronales Netzwerk (110) und erzeugend zu Zeitpunkten (t$_0$, t$_0$+Tp, t$_0$+2.Tp, ....) eine Information (Dj), welche den Verkehr in einem nächsten Vorhersagefenster (Tp) charakteri-

# EP 1 320 959 B1

siert, durch eine Folge der besagten Werte ($U_{\tau, i}$), die den abgelaufenen Verkehr charakterisieren;

- Lernmittel (200), welche das neuronale Netzwerk (110) fortlaufend trainieren, wobei die besagten Lernmittel Mittel umfassen zum Vergleichen der Leistungen des neuronalen Netzwerkes (110) mit denjenigen eines "angelernten" neuronalen Netzwerkes (110a), das den gleichen Aufbau wie das neuronale Netzwerk besitzt, und Mittel zum Überführen der Parameter des "angelernten" neuronalen Netzwerks (110a) in das neuronale Netzwerk (110), wenn die Leistungen des Ersten besser als die des Zweiten sind;

bei der die Vorhersagemittel (100) außerdem n Vorhersagefilter ($F_1$ - $F_n$) umfassen, welche jeweils unterschiedliche Filterfenster besitzen und die jeweils mit der besagten Informationsfolge ($U_{\tau, i}$) gespeist werden, die den abgelaufenen Verkehr charakterisiert, und die zu den festgelegten Zeitpunkten ($t_0$, $t_0$+Tp, $t_0$+2.Tp, ....) n jeweilige Zwischeninformationen ($DF1_i$ - $DFn_i$) erzeugen, welche den Verkehr in dem nächsten Vorhersagefenster (Tp) charakterisieren, die dem neuronalen Netzwerk (110) eingangsseitig zugeführt werden, und bei der die Lernmittel das neuronale Netzwerk durch jeweilige Folgen der besagten n Zwischeninformationen ($V_i$) trainieren, die den Verkehr in dem nächsten Vorhersagefenster (Tp) charakterisieren.

**15.** Vorrichtung gemäß Anspruch 14, bei der das neuronale Netzwerk (110) ein einfaches Perceptron ist.

**16.** Vorrichtung gemäß Anspruch 14 oder Anspruch 15, bei der die Vorhersagefilter ($F_1$ - $F_n$) Kalman-Filter sind.

**17.** Netzwerkknotenschnittstelle (2) zur Verbindung eines lokalen Netzwerkes (3) mit einem Telekommunikationsnetzwerk (4), umfassend eine Vorrichtung (1) gemäß einem der Ansprüche 14 bis 16.

**18.** Telekommunikationsnetzwerk (4) umfassend eine Netzwerkknotenschnittstelle (2) gemäß Anspruch 17.

## Claims

**1.** Method of predicting traffic (5) on successive prediction windows (Tp) on a telecommunication network, whereby

a) information ($U_{\tau,i}$) characterising past traffic on first respective observation windows (1) is produced on a permanent basis;
b) at specific instants (to, to+Tp, to+2.Tp, ....), information ($D_i$) is generated which characterises the traffic on a future prediction window (Tp) with the aid of prediction means (100) comprising a neural network (100), and is so on the basis of a set of said information (($U_{\tau,i}$) characterising past traffic;
c) the neural network (110) is trained on a permanent basis by comparing the performance of the neural network (110) with that of a "trained" neural network (110a) having the same structure as the neural network, the parameters of the "trained" neural network (110a) bring copied to the neural network (110) if the performance of the first is better than that of the second;

whereby step b) comprises steps which consist of:

b1) producing, in parallel, n items of intermediate information (Vi) characterising the traffic on the future prediction window (Tp) with the aid of n respective filters (F1-Fn) of the prediction means (100), these filters (F1-Fn) having different respective filtering windows and each being supplied with the set of information ($U_{\tau,i}$) characterising past traffic; and
b) producing said information ($D_i$) characterising the traffic on the future prediction window (Tp) with the aid of the neural network (110) receiving at the input the n sets of intermediate items of information ($V_i$) characterising the traffic on the future prediction window (Tp),

and whereby step c) involves training the neural network on the basis of respective sets of said n intermediate items of information ($V_i$) characterising the traffic on the future prediction window (Tp).

**2.** Method as claimed in claim 1, whereby said items of intermediate information ($V_i$) characterising the traffic on the future prediction window (Tp) are saved in a first data base (21).

**3.** Method as claimed in claim 2, whereby at step c), the respective sets of said n items of intermediate information ($V_i$) characterising the traffic on the future prediction window (Tp) are read from the first data base (21).

13

**4.** Method as claimed in any one of claims 1 to 3, whereby information $(U''_{\tau,i})$ characterising past traffic on second respective observation windows (T2) which coincide with the previous prediction windows (Tp) is also produced.

**5.** Method as claimed in claim 4, whereby said information $(U''_{\tau,i})$ characterising the traffic which has occurred on said respective second observation windows (T2) is saved in a second data base (22).

**6.** Method as claimed in any one of claims 1 to 3, whereby said first observation windows(T1) coincide with the previous prediction windows (Tp) and whereby said values $(U_{\tau,i})$ characterising past traffic on said respective first observation windows (T1) are saved in a second data base (22).

**7.** Method as claimed in claim 5 or claim 6, whereby at step c), the neural network (110) is additionally trained on the basis of a set of values $(U_{\tau,i}, U''_{\tau,i})$ characterising past traffic on said previous prediction windows (Tp), which are read from the second data base (22).

**8.** Method as claimed in any one of the preceding claims, in which the filters (F1-Fn) are Kalman filters.

**9.** Method as claimed in any one of the preceding claims, in which the neural network is a simple perceptron.

**10.** Method as claimed in any one of the preceding claims, whereby at step c), an error retro-propagation algorithm is run, which incorporates, as a cost function, a function containing a parameter (a) determining a specific error prediction rate.

**11.** Method as claimed in claim 10, in which said parameter can be dynamically modified.

**12.** Method as claimed in any one of the preceding claims, whereby a value characterising past traffic on a first observation window (T1) or on a second observation window (T2) is a high approximation of the quantity of data received during a time interval $(\tau)$ of a given duration on said observation window (T1, T2) produced on the basis of quantities of data $(B_j)$ received at specific respective time intervals $(\theta)$.

**13.** Method as claimed in claim 12, whereby the ratio between the width of said observation window (T1, T2) and the duration of said time interval $(\tau)$ is between 10 and 100.

**14.** Device for predicting traffic (5) on successive prediction windows (Tp) on a telecommunications network comprising:

- means for characterising (10, 11, 12) past traffic, which produce information $(U_{\tau,i})$ characterising past traffic on the respective observation windows (T1) on a permanent basis;
- prediction means (100) containing a neural network (110), which produce information $(D_i)$ at instants (to, to+Tp, to+2.Tp, ...) characterising the traffic on a future prediction window (Tp) on the basis of a set of said values $(U_{\tau,i})$ characterising past traffic;
- training means (200) training the neural network (110) on a permanent basis, said training means comprising means for comparing the performance of the neural network (110) with that of a "trained" network (110a) having the same structure as the neural network and means for copying the parameters of the "trained" neural network (110a) to the neural network (110) if the performance of the first is better than that of the second;

    in which the prediction means (100) additionally comprise n prediction filters(F1-Fn) with different respective filtering windows, each being supplied with said set of information $(U_{\tau,i})$ characterising past traffic and producing at said specific instants (to, to+Tp, to+2.Tp, ...) n respective items of intermediate information $(DF1_j\text{-}DFn_j)$ characterising the traffic on the future prediction window (Tp), which are forwarded to the input of the neural network (110), and in which the training means train the neural network on the basis of respective sets of said n items of intermediate information $(V_i)$ characterising the traffic on the future prediction window (Tp).

**15.** Device as claimed in claim 14, in which the neural network (110) is a simple perceptron.

**16.** Device as claimed in claim 14 or 15, in which the prediction filters (F1-Fn) are Kalman filters.

**17.** Network node interface (2) for inter-connecting a local area network (3) with a telecommunications network (4), incorporating a device (1) as claimed in any one of claims 14 to 16.

**18.** Telecommunications network (4) incorporating a network node interface (2) as claimed in claim 17.

FIG.1.

FIG.6.

FIG.2.

FIG.3.

FIG.4.

FIG.5.